(19) Europäisches Patentamt
European Patent Office
Office européen des brevets

(11) Veröffentlichungsnummer: **0 230 292 B1**

(12) **EUROPÄISCHE PATENTSCHRIFT**

(45) Veröffentlichungstag der Patentschrift: **19.11.92**

(51) Int. Cl.5: **C09D 5/44**

(21) Anmeldenummer: **87100579.9**

(22) Anmeldetag: **17.01.87**

# (54) Wässriges,hitzehärtbares Überzugsmittel,dessen Verwendung und damit beschichtete Gegenstände.

(30) Priorität: **21.01.86 DE 3601560**

(43) Veröffentlichungstag der Anmeldung:
**29.07.87 Patentblatt 87/31**

(45) Bekanntmachung des Hinweises auf die Patenterteilung:
**19.11.92 Patentblatt 92/47**

(84) Benannte Vertragsstaaten:
**DE**

(56) Entgegenhaltungen:

| | |
|---|---|
| EP-A- 0 032 554 | EP-A- 0 101 307 |
| EP-A- 0 174 628 | EP-A- 0 188 689 |
| US-A- 4 452 929 | US-A- 4 487 861 |

(73) Patentinhaber: **Herberts Gesellschaft mit beschränkter Haftung**
**Christbusch 25**
**W-5600 Wuppertal 2(DE)**

(72) Erfinder: **Patzschke, Hans-Peter, Dr.**
**Am Heckendorn 71**
**W-5600 Wuppertal 2(DE)**
Erfinder: **Lüttenberg, Albrecht**
**Dönberger Str. 136**
**W-5600 Wuppertal 1(DE)**
Erfinder: **Schlinsog, Hans-Jürgen**
**Ellenbeck 81**
**W-5603 Wülfrath(DE)**
Erfinder: **Bogdan, Wolfgang**
**Hermann-Ehlers-Str. 105**
**W-5600 Wuppertal 1(DE)**

(74) Vertreter: **Türk, Gille, Hrabal, Leifert**
**Brucknerstrasse 20**
**W-4000 Düsseldorf 13(DE)**

**EP 0 230 292 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein wäßriges, hitzehärtbares Überzugsmittel enthaltend als Bindemittel auf Epoxidharz- und Polyesterharzbasis im Gemisch mit Aldehyd-Kondensationsharz als Vernetzungsmittel sowie mit organischem Lösemittel in einer Menge bis zu 20 Gew.-% bezogen auf das Gesamtgewicht des Überzugsmittels, gegebenenfalls üblichen Lackzusatzstoffen sowie gegebenenfalls Pigmenten und/oder Füllstoffen.

Die Erfindung betrifft außerdem die Verwendung dieses Überzugsmittels zum Beschichten von Substraten, ein Verfahren zum Beschichten der Substrate, insbesondere mittels der anodischen Elektrotauchlackierung (ATL), und nach diesem Verfahren beschichtete Gegenstände. Überzugsmittel der eingangs erwähnten Art sind bekannt,z.B. wird in der EP-A-01 44 872 (US-A-4 487 861) eine wäßrige Polymerzusammensetzung beschrieben, die ein Epoxidharz-Acryl-Pfropfcopolymeres und einen Epoxidharz-Phosphorsäureester enthält. Die Zusammensetzung kann mit einem Aminoplastharz versetzt werden. Sie dient als Überzugszusammensetzung, führt jedoch zu Überzügen, die für die Beschichtung von Dosen, besonders Weißblechdosen, die zur Konservierung von Nahrungsmitteln dienen sollen, qualitativ nicht ausreichend sind. Eine Beschichtung durch Elektrophorese wird nicht beschrieben.

In der EP-A-01 74 628 werden Gemische aus Epoxid-Phosphorsäureestern und Acrylatharzen elektrophoretisch abgeschieden. Sie führen zu Dosenüberzügen, die für eine Füllung und Lagerung mit Nahrungsmitteln ungeeignet sind.

In der EP- 188 689 werden Epoxidharz-Phosphorsäureester beschrieben, die mit Harzen kombiniert werden, die mit einer Base in Wasser nicht selbstdispergierbar sind. Es handelt sich hier um Acrylharze, Butadienöle, Polyester, Alkydharze oder Polyurethane, die im wesentlichen keine freien Säuregruppen mehr enthalten. Experimentielle Versuche zeigen, daß sich bei elektrophoretischer Beschichtung, besonders von Weißblechdosen, keine geeigneten, glatten Filme herstellen lassen.

Die zunehmend verschärften Anforderungen des Umweltschutzes führen zur Entwicklung von wäßrigen Überzugsmitteln, die nur geringe Mengen organische Lösemittel enthalten. Besonders schwierig ist es, solche wäßrigen Überzugsmittel für das bekannte Elektrotauch-Lackierverfahren (ETL), insbesondere zum Lackieren von Emballagen wie Getränke- und Nahrungsmitteldosen einzusetzen. Die Ursache hierfür liegt einmal in der apparativen Einrichtung (vergl. DE-A-33 04 940), zum anderen in der Entwicklung geeigneter Überzugsmittel.

Elektrophoretische Abscheidungen mit den bekannten wasserverdünnbaren Lacken zeigten, daß diese oft zu elektrischen Durchschlägen neigen. Die eingebrannten Filme haben eine zu hohe Porigkeit, was bei der Lagerung von Getränken und Lebensmitteln zum Lochfraß führt. Diese Nachteile treten ein, wenn man carboxylgruppenhaltige und phosphorsäurehaltige Acrylatharze, Polyester oder Epoxidharze mit Melaminharzen oder Phenolharzen kombiniert. Um einwandfreie ETL-Beschichtungen zu erhalten, müßen lagerbeständige, wäßrige Lacke gefunden werden, die einen ausreichenden Umgriff haben, sich ohne elektrische Durchschläge einwandfrei abscheiden lassen, als eingebrannter Film eine möglichst niedrige Porigkeit zeigen und den gesundheitlichen Vorschriften der einzelnen Länder entsprechen, z.B. FDA der USA und BGA der Bundesrepublik Deutschland.

Der Erfindung liegt die Aufgabenstellung zugrunde, diese Nachteile zu vermeiden, insbesondere die elektrischen, mechanischen und chemischen Eigenschaften des Bades und des abgeschiedenen und eingebrannten Filmes zu verbessern.

Es wurde überraschenderweise gefunden, daß diese Aufgabenstellung mit dem Überzugsmittel gemäß den Patentansprüchen gelöst wird.

Gegenstand der Erfindung ist demgemäß ein wäßriges, hitzehärtbares Überzugsmittel der eingangs genannten Gattung, das dadurch gekennzeichnet ist, daß es als Bindemittel enthält

| | |
|---|---|
| 85 bis 40 Gew.-% | eines Gemischs aus einem fettsäurefreien, sauren Epoxidharz-Phosphorsäureester mit einer Säurezahl von 10 bis 150, besonders 15 bis 150, hergestellt aus einem epoxidgruppenhaltigen Polyglycidylether und/oder Polyglycidyl(meth)acrylatharz mit mehr als 1.3 Epoxidgruppen pro Molekül und mit einem Epoxid-Äquivalentgewicht von 180 bis 4000, insbesondere bis 2500, und einem phenolharzmodifizierten, carboxylgruppenhaltigen, ölfreien Polyester mit einer Säurezahl von 15 bis 175 und einer OH-Zahl von 15 bis 175 (Komponente A) |
| 0 bis 25 Gew.-% | und bevorzugt 5 bis 25 Gew.-% Epoxidharz-Pfropfpolymerisat mit einer Säurezahl von 30 bis 200, hergestellt aus einem epoxidgruppenfreien Reaktionsprodukt von fettsäurefreien Polyglycidylethern mit mehr als 1.3 Epoxidgruppen pro Molekül und einem Epoxid-Äquivalentgewicht von 1000 bis 5000, besonders 1000 bis 3000, mit $\alpha,\beta$-ungesättigten Monocarbonsäuren (Komponente B) |

| | |
|---|---|
| 5 bis 40 Gew.-% | vollverethertes Amin-Formaldehyd-Kondensationsharz und/oder vollverethertes Phenol-Formaldehydkondensationsharz mit mindestens 2 reaktiven Stellen pro Molekül (Komponente C). |

Bevorzugte Mengenverhältnisse sind:

Komponente A: 75 bis 45 Gew.-%
Komponente B: 10 bis 20 Gew.-%
Komponente C: 10 bis 35 Gew.-%.

Bei dem in der Komponente A eingesetzten fettsäurefreien sauren Epoxidharz-Phorsphorsäureester handelt es sich um einen solchen mit einer Säurezahl von 10 bis 150. Bevorzugt liegt diese Zahl bei 15 bis 150. Es hat sich gezeigt, daß die Säurezahl des Epoxidharz-Phosphorsäureesters günstig bei niedrigeren Werten als die Säurezahlen der übrigen Komponenten modifizierter ölfreier Polyester der Komponente A und/oder Epoxidharz-Pfropfpolymerisat der Komponente B liegt. Es ist daher bevorzugt, wenn die Säurezahl des Epoxidharz-Phosphorsäureesters 10 bis 40, bevorzugt 20 bis 40, beispielsweise 10 bis 35 oder 12 bis 30 beträgt.

Der saure Epoxidharz-Phosphorsäureester der Komponente A hat bevorzugt ein Molekulargewicht von 2500 bis 7000, insbesondere von 3000 bis 5000.

Das Epoxidäquivalentgewicht des in der Komponente A eingesetzten Epoxidharz-Phosphorsäureesters liegt dann naturgemäß, entsprechend den bevorzugten Säurezahlen, bevorzugt bei 500 bis 4000, wobei es je nach Säurezahl bevorzugt sein kann, Werte von 1500 bis 5000 oder Werte von 1800 bis 4000 speziell 2000 bis 3500 zu wählen, wobei sich die letztgenannten höheren Werte für das Epoxidäquivalentgewicht naturgemäß für die bevorzugten niedrigeren Säurezahlen ergeben. Es sind beispielsweise auch Epoxidäquivalentgewichte von 180 bis 2500 geeignet.

Weist der gemäß der vorstehend erwähnten bevorzugten Ausführungsform als Komponente A eingesetzte Epoxidharz-Phosphorsäureester Säurezahlen im genannten unteren Bereich auf, so ist es, um ein stabiles wäßriges Überzugsmittel zu erhalten, notwendig, das die übrigen Komponenten, wie phenolharzmodifizierter ölfreier Polyester (weiterer Bestandteil der Komponente A) und/oder Epoxidharz-Pfropfpolymerisat (Komponente B) Säurezahlen in einem höheren Bereich enthalten. Die für Dosenlacke bevorzugt eingesetzten Epoxidharz-Phosphorsäureester mit niedriger Säurezahl und hohem Molekulargewicht lassen sich elektrophoretisch nur dann mit glatter Oberfläche abscheiden, wenn sie zumindest eine geringe Menge an phenolharzmodifiziertem Polyester oder acryliertem Epoxidharz mit höherer Säurezahl enthalten.

Erfindungsgemäß ist es bevorzugt, für die Komponente A Verbindungen mit einer relativ niedrigen Säurezahl, beispielsweise 12 bis 30, im Gemisch einzusetzen mit solchen, die eine höhere Säurezahl enthalten, beispielsweise 35 bis 100. Verbindungen der Komponente A mit sehr niedriger Säurezahl sind unter Umständen in Wasser nicht gut löslich. Durch Vermischen mit Komponente A und Komponente B mit hoher Säurezahl wird jedoch eine ausreichende Mischbarkeit erzielt. Eine ausreichende Mischbarkeit mit Wasser bei Komponente A mit niedriger Säurezahl von z.B. 10 bis 40 kann man auch dadurch erzielen, daß man diesen Komponenten eine relativ hohe OH-Zahl, z.B. 100 bis 200 verleiht.

Bei dem in der Komponente A außerdem eingesetzten phenolharzmodifizierten carboxylgruppenhaltigen ölfreien Polyester ist die Säurezahl bevorzugt 30 bis 110, besonders bevorzugt 35 bis 70.

Bevorzugt ist die Komponente A ein Gemisch aus 40 bis 90, z.B. 40 bis 80 Gew.-% des fettsäurefreien sauren Epoxidharz-Phosphorsäureestersund 10 bis 60, z.B. 20 bis 60 Gew.-% des phenolharzmodifizierten, carboxylgruppenhaltigen ölfreien Polyesters.

Als Basisharz in der Komponente A eignet sich ein neutralisiertes Reaktionsprodukt von Phosphorsäure, besonders Orthophosphorsäure mit epoxidgruppenhaltigen Polyglycidylethern und/oder Polyglycidyl(meth)-acrylaten. Sie werden in bekannter Weise z.B. nach der DE-A- 27 57 733 (US-A-4 164 487 und US-A-4 289 812) hergestellt. Unter Polyglycidylether im Rahmen dieser Erfindung werden vorzugsweise Harze der allgemeinen idealisierten Formel

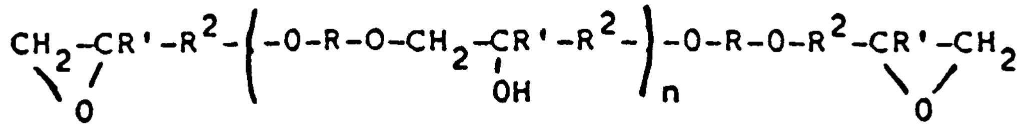

mit

R =

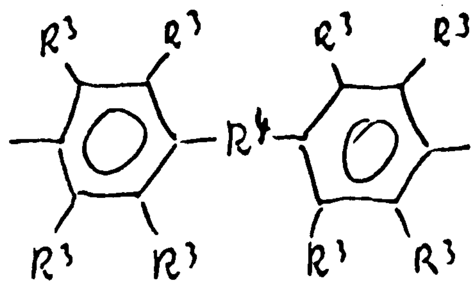

verstanden, wobei

R' = $-C_mH_{2m+1}$ und/oder bevorzugt -H,
$R^4$ = $-SO_2-$, -O-, bevorzugt $-CR^3{}_2-$,
$R^2$ = $-(CR^1{}_2)_m-$, bevorzugt $-CH_2-$,
$R^3$ = Halogen oder R'
n = 0 bis 15, bevorzugt 6 bis 13, und
m = 1 bis 8, bevorzugt 1 ist.

Beispiele sind Reaktionsprodukte verschiedenen Molekulargewichts aus Dihydroxy-diphenylpropan (Bisphenol A) oder Dihydroxy-diphenylmethan (Bisphenol F) und Epichlorhydrin und/oder Methylepichlorhydrin. Produkte mit höheren Molekulargewichten können auch nach anderen Verfahren hergestellt werden, wie Umsetzung von niedrigen Polyepoxiden mit Bisphenol A. Diese Polyglycidylether haben ein Epoxid-Äquivalentgewicht von 180 bis 5000, besonders von 1500 bis 5000 speziell 2000 bis 4000. Sie können teilweise oder vollständig hydriert sein oder in Gemischen mit unterschiedlichem Epoxid-Äquivalentgewicht oder mit unterschiedlicher Struktur eingesetzt werden. Geeignet sind auch Polyglycidylether von phenolischen Novolakharzen, wodurch die Funktionalität von 2 bis auf etwa 6 Glycidylgruppen pro Molekül gesteigert werden kann. Die Funktionalität der Harze kann auch durch Reaktion mit monofunktionellen (Alkyl)phenolen oder Monocarbonsäuren, bevorzugt α-verzweigte Monocarbonsäuren herabgesetzt werden. Zum Elastifizieren kann ein Teil des beschriebenen Polyglycidylethers durch aliphatische Polyglycidylether der Formel

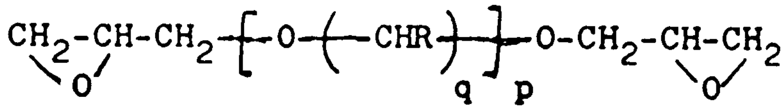

ersetzt werden, wobei R = H oder ein niedriger, gegebenenfalls mit verschiedenen Substituenten versehener Alkylrest ist und q = 2 bis 6 und p = 3 bis 50 bedeutet. Beispiele sind Reaktionsprodukte von Epichlorhydrin mit Polypropylenglykol oder Polybutylenglykol verschiedenen Molekulargewichts. Die Epoxidharze können auch durch Reaktion von längerkettigen Dicarbonsäuren wie Isophthalsäure, Cyclohexandicarbonsäure, Adipinsäure oder Sebacinsäure mit langkettigen Polyalkoholen wie Hexandiol-1,6, Glycerin, Monoanhydropentaerythrit, Polytetrahydrofurandiol, Polycaprolactondiol, Polycaprolactamdiol oder Polybutadiendiol, sowie NCO-terminisierten Reaktionsprodukten aus Polyalkoholen und Polyisocyanaten oder halbblockierten Diisocyanaten modifiziert sein oder stufenweise hergestellt werden. Die Umsetzung wird üblicherweise mit 70 bis 90 %igen Phosphorsäure-Lösungen in einem geschlossenen Druckgefäß während 3 bis 6 Stunden bei Temperaturen von 110 bis 130°C durchgeführt, wobei etwa 0.3 bis 1.2 Phosphorsäure-Gruppen, bevorzugt weniger als 1 Phosphorsäure-Gruppe pro Oxiranring eingesetzt werden. Es werden etwa 0,5 bis 3 Gew.-% Phosphorsäure mit 100 g Epoxidharz umgesetzt. Für die Verdünnbarkeit mit Wasser ist außerdem der Anteil an Wasser maßgebend, der zur Addition an oxirangruppen und zur Hydrolyse der gebildeten Phosphorsäure-di-und-triester dient. Der Gehalt an nicht umgesetzter Phosphorsäure im Endprodukt sollte so gering wie möglich sein. Als flüchtige Basen werden zum Neutralisieren besonders vorteilhaft niedrigmolekulare, flüchtige Amine der Formel $-NR_2$ eingesetzt, wobei R für -H, -Methyl und/oder -Ethyl

steht. Dies ist im einzelnen in der DE-A-27 57 733 (US-A-4 164 487) beschrieben.

Als epoxidgruppenhaltige Harze (Komponente A ) können auch Poly(meth)acrylatharze eingesetzt werden, die neben (Meth)acrylsäureestern mit $C_1$ bis $C_{15}$-Alkoholresten und/oder gegebenenfalls substituierten Vinylaromaten epoxidgruppenhaltige, ungesättigte Monomere einpolymerisiert enthalten. Hierfür geeignet sind Glycidylether der (Meth) acrylsäure sowie der Malein- und/oder Fumarsäure, Glycidylether von ungesättigten Alkoholen wie Vinylalkohol, Allylalkohol und/oder Hydroxyalkyl(meth)acrylat, Glycidylverbindungen des (Meth)acrylamids, des Malein- und/oder Fumarsäurediamids oder des Maleinimids. Die Harze werden durch radikalische Lösungspolymerisation bei Temperaturen von 60 bis 160° C hergestellt.

Eine andere Gruppe von Basisharzen (Komponente A ) sind carboxylgruppenhaltige, phenolharzmodifizierte Polyester, wie sie in der AT-A-280 605, DE-A-26 38 464 und/oder EP-B-0 062 786 beschrieben werden. Hierzu werden Polyole oder hydroxylgruppenhaltige Vorkondensate mit vorzugsweise 2 bis 4 OH-gruppen pro Molekül mit höhermolekularen hydroxylgruppenhaltigen Phenolethern so umgesetzt, daß sie durch Neutralisation in eine wasserverdünnbare Form übergeführt werden können. Um optimale Eigenschaften zu erreichen, müssen die eingesetzten Polyesterharze ein mittleres Molekulargewicht $\overline{Mn}$ von mindestens 1500 aufweisen und jeweils 0.3 bis 3, vorzugsweise 0.8 bis 2 Hydroxyl- und Carboxyläquivalente pro 1000 g Polyester enthalten. Hierbei werden in bekannter Weise aus Polyalkoholen, wie Hexandiol-1,6, Neopentylglykol, Cyclohexandimethanol, Trimethylolpropan, Glycerin und/oder Pentaerythrit, und Polycarbonsäuren, wie Adipinsäure, Isophthalsäure, Cyclohexan-1,4-dicarbonsäure, oder Trimellithsäureanhydrid Polyester-Vorprodukte hergestellt, die keine ungesättigten Fettsäuren enthalten. Diese ölfreien Polyester werden bei Abwesenheit von sauren Katalysatoren mit ein- oder mehrkernigen Phenolen, besonders Alkylphenolen, bei 60 bis 160°C, besonders 100 bis 130°C, und mit Aldehyden umgesetzt. Bevorzugte Phenole sind Monoalkylphenole, wie p-tert.-Butylphenol, p-Cumylphenol, Nonylphenol, Phenylphenol oder Bisphenol A (1,1-Bis-4-hydroxyphenyl-propan),die in Mengen von 0.5 bis 50 Gew.-% eingebaut werden. Besonders günstige Ergebnisse bezüglich der Resistenzeigenschaften der eingebrannten Filme gegen aggressive Lösemittel werden bei teilweisem oder vollständigem Ersatz der genannten Phenole durch Phenolcarbonsäuren erzielt. Hierzu geeignet sind z.B. 4,4-Bis-(4-hydroxyphenyl)pentansäure, Glykolsäurederivate von Diphenolen, wie das 2-(4-Hydroxyphenyl)-2-(carbäthoxyphenyl)propan, oder Salicylsäure. Als Aldehyd wird, wie in der Phenolharzchemie üblich, vorzugsweise Formaldehyd in einer Menge von 0.5 bis 3 Mol pro Mol phenolischer Hydroxylgruppe zugesetzt. Nach einem anderen Verfahren können solche Kondensationsprodukte dadurch hergestellt werden, daß man ein Resol aus ein und/oder mehrkernigen Phenolen mit carboxylgruppenhaltigen Polyestern bei 80 bis 240°C umsetzt, die ein mittleres Molekulargewicht $\overline{Mn}$ von 300 bis 1500 und eine Säurezahl von 50 bis 150 mg KOH/g Festharz aufweisen.

Der phenolharzmodifizierte Polyester enthält bevorzugt eine Säurezahl von 30 bis 110, besonders bevorzugt von 35 bis 70.

Als Komponente B werden 5 bis 25 Gew.-% carboxylgruppenhaltiger Epoxidharze mit einer Säurezahl über 30, bevorzugt von 45 bis 150, besonders bevorzugt 65 bis 110, eingesetzt, die durch Pfropfpolymerisation mit, $\alpha,\beta$-ungesättigten Monocarbonsäuren, gegebenenfalls unter Zusatz von (Meth)acrylsäureestern und/oder (substituierten) Vinylaromaten hergestellt werden. Ihr Epoxid-Äquivalentgewicht beträgt 1000 bis 5000, bevorzugt 1000 bis 3000. Hierbei werden zunächst im wesentlichen alle Oxiranringe mit einer H-aciden Verbindung umgesetzt. Diese sind monofunktionelle Verbindungen, die keine Molekülvergrößerung bewirken, wie Benzoesäure oder tert. Butylbenzoesäure, Alkyl- oder Arylphenole wie tert.-Butylphenol oder Phenylphenol, Monoalkohole und/oder Monoepoxide. Bei Einsatz von bifunktionellen H-aciden Verbindungen wie Isophthalsäure oder Bisphenol A tritt eine Molekülvergrößerung ein. Die Steigerung des Molekulargewichts wird dabei durch die eingesetzten Mengenverhältnisse gesteuert. Die Pfropfung am aliphatischen C-Atom des modifizierten Epoxidharzes, das in organischen Lösemitteln wie Butanol oder Butoxyethanol gelöst ist, tritt bei Temperaturen von 110 bis 130°C bei Zusatz von mehr als 3 Gew.-%, bevorzugt 4 bis 8 Gew.-%, besonders bevorzugt 6 bis 7 Gew.-% Benzoylperoxid oder ähnlich wirkenden Initiatoren ein. Um die Pfropfungspolymerisation zu unterstützen, werden bevorzugt Epoxidharze mit einem höheren Epoxid-Äquivalentgewicht wie beispielsweise 2000 bis 4000 ausgewählt. Es werden mindestens 1.5, bevorzugt mindestens 5 Gewichtsteile, besonders bevorzugt mindestens 10 Gewichtsteile Monomermischung auf 100 Gewichtsteile Epoxidharz eingesetzt. Überlegene Eigenschaften erhält man, wenn die Komponente B Epoxidharzmengen von mehr als 40 Gew.-%, bevorzugt mehr als 50 Gew.-%, besonders bevorzugt zwischen 60 und 90 Gew.-% enthält. Die Herstellung dieser Produkte ist in der DE-A-27 21 822 und DE-A-27 21 823 (US-PS-4 308 185 und 4 212 781) beschrieben. Bevorzugt werden acrylierte Epoxidharze, die nur mit Acrylsäure oder Methacrylsäure und Styrol pfropfpolymerisiert sind.

Um die in den Komponenten A und B vorhandenen Carboxyl- und Hydroxylgruppen zu vernetzen, werden 5 bis 40 Gew.-% eines oder mehrerer Aldehyd-Kondensationsharze als thermische Vernetzungsmittel zugesetzt. Hierunter werden verstanden Amin- und Phenol-Formaldehyd-Kondensationsharze, wie sie

dem Stande der Technik entsprechen, aber auch Copolymerisate, die über eingebaute reaktive Monomere reagieren können. Diese Vernetzungsmittel (Komponente C) sind in den erfindungsgemäßen Bindemitteln (A und B) dispergierbar, wobei zum Verbessern der Löslichkeit gegebenenfalls Säuregruppen enthalten sein können, die dem Harz eine Säurezahl bis zu etwa 80 mg KOH pro g Festharz geben.

Amin-Formaldehyd-Kondensationsharze entstehen durch Reaktion von Aldehyden mit Harnstoff, N-Alkyl-harnstoff, Dicyandiamid, verschiedenen Triazinen, wie Melamin, Benzoguanamin und Acetoguanamin oder ihren Mischungen. Die Aldehyde können dabei monofunktionell, aber auch polyfunktionell sein. Beispiele hierfür sind Formaldehyd und seine Polymerisationsprodukte, wie Paraformaldehyd, Polyoxymethylen, Trioxan, oder aliphatische und cyclische Aldehyde, wie Glyoxal, Acetaldehyd, Acrolein, Propionaldehyd, Butyraldehyd und Furfural. Je nach Reaktionsbedingungen und Methylolierungsgrad werden Harze mit verschiedenen Molekulargewichten und unterschiedlicher Reaktivität erhalten. Die Kondensation mit Formaldehyd, Furfural, Paraformaldehyd, Polyoxymethylen oder Trioxan wird im allgemeinen unter Zusatz von schwachen Säuren oder Basen als Katalysator ausgeführt. Starke Säuren werden verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd. Die Alkohol-, bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Propanol, Butanol, Heptanol, Benzylalkohol und andere aromatische Alkohole, cyclische Alkohole, wie Cyclohexanol, oder Monoether von Ethylenglykolen, wie Ethoxyethanol- oder Butoxyethanol. Sollen Alkohole mit mehr als 4 C-Atomen eingebaut werden, so wird die Methylolgruppe erst mit einem niedrigeren Alkohol verethert und anschließend der höhere Alkohol durch Umetherung eingeführt. Die bevorzugten Alkohole sind niedere aliphatische Monoalkohole, wie Methanol und/oder Butanol. Besonders bevorzugt werden Melaminharze, die mit 3 bis 6 Molen Formaldehyd umgesetzt und anschließend vollständig mit Methanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxy-alkyl(meth)acrylaten oder Allylalkohol ungesättigte Melaminharztypen.

Die bevorzugten Phenolharze sind Reaktionsprodukte von Phenol oder substituierten Phenolen mit verschiedenen Aldehyden im molaren Überschuß in Gegenwart alkalischer Katalysatoren (Resol-Typ.). Beispiele für phenolische Verbindungen sind Phenol, Kresol, Xylenol, Resorcin und substituierte Phenole wie p-tert.-Butylphenol, p-tert.-Amylphenol, p-Phenyl-phenol, Isothymol, Cardanol oder auch mehrkernige Phenole wie Dihydroxy-diphenylpropan (Bisphenol A) oder Dihydroxy-diphenylmethan. Als Ausgangsmaterial dienen auch phenolische Novolakharze, die gegebenenfalls mit Monocarbonsäuren, bevorzugt $\alpha$-verzweigten Monocarbonsäuren, Monophenolen, die besonders mit C2 bis C 18 Alkylgruppen substituiert sind oder auch Monoepoxiden wie $\alpha$-Monoepoxidalkane, Monoglyceridether oder Monoglyceridester, defunktionalisiert werden. Als Aldehyde finden Verwendung Formaldehyd und seine Polymerisationsprodukte wie Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural. Die Methylolgruppen werden teilweise oder bevorzugt vollständig verethert mit Methanol, Ethanol, Propanol und/oder Butanol. Bevorzugt werden Harze, die pro phenolischer OH-Gruppe mit überschüssigem Formaldehyd, d.h. etwa 1.1 bis 2.5 Mol Formaldehyd in alkalischem Medium umgesetzt werden. Harze auf Basis Bisphenol A, die mit etwa 4 Formaldehyd-Molekülen umgesetzt und vollständig mit Butanol verethert sind, werden besonders bevorzugt. Es können sowohl wasserunlösliche, wie auch carboxylgruppenhaltige Phenolharze verschiedenen Molekulargewichts verwendet werden. Hierfür geeignete Phenolcarbonsäuren sind beispielsweise 4,4-Bis-(4-hydroxyphenyl)-pentansäure, Glykolsäurederivate von Bis-phenolen, wie das 2-(4-Hydroxyphenyl)-2-(carbethoxyphenyl)propan, oder Salicylsäure. Gegebenenfalls können auch sehr niedrigmolekulare, gegebenenfalls ungesättigte, Methylolphenolether eingesetzt werden wie Trimethylolphenolallylether (Methylonharze, Warenzeichen).

Reaktive Mischpolymere, die mit Carboxylgruppen oder Hydroxylgruppen der Komponenten A und B vernetzen können, werden durch Copolymerisation von N-Methylol-ethern der (Meth)acrylamide oder Methylacrylamidoglycolat-methylether hergestellt. Neben diesen reaktiven Monomeren werden noch (Meth)-acrylsäureester, Hydroxyalkyl(meth)acrylate oder gegebenenfalls substituierte Vinylaromaten mit einpolymerisiert. Der Einbau von N-Methylolethern kann auch durch polymeranaloge Umsetzung von einpolymerisiertem (Meth)acrylamid mit Formaldehyd und Monoalkoholen erfolgen. Die Harze werden im allgemeinen durch Lösungspolymerisation bei einem Festkörper von 60 bis 90 Gew.-% unter Zusatz von radikalischen Initiatoren hergestellt.

Die Bindemittel werden mit den Neutralisationsmitteln einzeln oder im Gemisch neutralisiert und gegebenenfalls in Gegenwart von Lösemitteln mit entionisiertem oder destilliertem Wasser verdünnt. Als Neutralisationsmittel dienen beispielsweise leicht flüchtige Amine, wie Ammoniak, niedere primäre, sekundäre oder tertiäre Alkylamine, die beim Einbrennen leicht aus dem Film herausgehen. Es können jedoch auch schwerflüchtige Amine und/oder Aminoalkohole eingesetzt werden, wenn sie die Fähigkeit haben, durch geeignete Substituenten, wie Hydroxylgruppen, in den Filmverband fest einzureagieren. Beispiele für Amine sind Diethylamin, Triethylamin, n-Butylamin, Morpholin, N-Methylmorpholin, Aminoethanol, Diisopropanolamin, 2-Dimethylamino-2-methylpropanol, 2-Amino-2-methyl-1-propanol, Tris(hydroxymethyl)-aminomethan, Methyldiethanolamin, Triethanolamin. Der pH-Wert der Lacke liegt bevorzugt zwischen 7.0 und 8.5

Als Lösemittel sind geeignet primäre, sekundäre und/oder tertiäre Alkohole, Ethylen- oder Propylenglykol-mono- oder -diether, Diethylen- oder Dipropylenglykol-mono- oder -diether, Diacetonalkohol oder auch geringe Anteile von nicht wasserverdünnbaren Lösemitteln wie Benzinkohlenwasserstoffen, Hexylglykol, Phenoxypropanol und/oder 2.2.4-Trimethylpentandiol-1.3-monoisobuttersäureester. Sie sind notwendig, um ein Nachfüllmaterial mit verarbeitungsfähiger Viskosität zu erhalten, bei seinem aufgebrachten Film Oberflächenstörungen zu verhindern oder einen glatten Verlauf zu erhalten. Es wird ein möglichst niedriger Gehalt an organischen Lösemitteln im verarbeitungsfähigen Lack angestrebt. Elektrotauchlacke enthalten zweckmäßig unter 15 Gew.-%, vorzugsweise unter 5 Gew.-% Lösemittel, denn mit steigendem Lösemittelgehalt verschlechtert sich der für die Lackierung notwendige Umgriff.

Der Badfestkörper gemäß der Erfindung beträgt nach Verdünnen mit Wasser 5 bis 60 Gew.-%. Beim Einstellen des Lackes auf einen höheren Festkörper von 25 bis 50 Gew.-%, bevorzugt 30 bis 45 Gew.-%, werden wasserverdünnbare Einbrennlacke erhalten, die durch Tauchen, Spritzen, Walzen usw. auf das zu lackierende Objekt aufgebracht werden. Verdünnt man dagegen auf einen Feststoffgehalt von 5 bis 30 Gew.-%, vorzugsweise 8 bis 20 Gew.-%, so ist der Lack für die elektrophoretische Abscheidung geeignet.

Mit steigendem Festkörper wird die Badleitfähigkeit erhöht und das Abscheideäquivalent (Ampere x sec/g) herabgesetzt, wodurch der Umgriff gesteigert werden kann. Durch die hohe Konzentration an schichtbildenden Ionen geht dabei der spezifische Schichtwiderstand durch ein Maximum. Er beträgt bevorzugt 1000-5000 $\cdot$ $10^5$ Ohm $\cdot$ cm.

Die Badtemperatur liegt zwischen 20 und 35°C. Mit fallender Temperatur erhöht sich der Umgriff. Temperaturen unter 20°C sind unwirtschaftlich, weil die bei der ETL-Beschichtung entstehende Wärme durch viel Kühlwasser wieder abgeführt werden muß. Temperaturen über 35°C erschweren die Badführung, weil zu viel Lösemittel verdunstet und Hydrolyseerscheinungen am Bindemittelsystem Schwankungen in den elektrischen Daten erzeugen.

Das Überzugsmittel kann zusätzlich übliche lacktechnische Hilfsmittel wie Katalysatoren, Verlaufmittel, Antischaummittel, Gleitmittel usw. enthalten. Naturgemäß sind solche Zusatzstoffe auszuwählen, die mit Wasser bei dem pH-Wert des Bades keine störenden Reaktionen eingehen, keine störenden Fremdionen einschleppen und bei längerem Stehen nicht in nichtaufrührbarer Form ausfallen.

Die Bindemittel können pigmentiert oder unpigmentiert eingesetzt werden. Als Pigmente und Füllstoffe können gegebenenfalls solche Materialien eingesetzt werden, die aufgrund ihrer geringen Teilchengröße unter 10 µm, besonders unter 5 µm, in den Lack stabil eindispergiert werden können und sich beim Stehen wieder aufrühren lassen. Sie dürfen keine störenden Fremdionen enthalten und dürfen mit Wasser oder dem Neutralisationsmittel nicht chemisch reagieren. Die Pigmentierung kann sowohl weiß als auch farbig sein; weiß wird bevorzugt. Bei zusätzlichem Einbau von Interferenzpigmenten ist es möglich, Metall-Effekt-Lackierungen wie Aluminium-, Silber-, Messing-, Kupfer-, Gold-Effekte zu erzielen. Pigmente wie Titandioxid werden in einem konzentrierten Mahlgut angerieben und danach mit weiterem Bindemittel auf ein Pigment-Bindemittel-Verhältnis von etwa 0.1 : 1 bis 0.7 : 1 eingestellt. Durch Einbau von Pigmenten wird der Umgriff gesteigert.

Anstelle von Pigmenten können fein pulverisierte, nicht lösliche Harze wie pulverisierte Polykohlenwasserstoffharze, Epoxidharze oder blockierte Polyisocyanate eingesetzt werden, wobei die Zusatzmengen so ausgewählt werden, daß sie das Maximum des Schichtwiderstandes nicht überschreiten. Bindemittel, Pigmentgehalt, Badfestkörper, Lösmittelgehalt, Auswahl und Menge des Neutralisationsmittels werden so mit den Beschichtungsbedingungen wie Badtemperatur, Abscheidespannung und Abscheidezeit abgestimmt, daß im Elektrotauchlackbad (ETL-Bad) eine vollständige Beschichtung erfolgt, die nach Einbrennen im Inneren der Dose bei Schichtdicken von mindestens 3 µm, bevorzugt mindestens 4 µm, ganz bevorzugt mindestens 5 µm und höchstens 10 µm, besonders höchstens 7 µm porenfrei ist.

Die Elektrotauchlackierung (ETL) erfolgt in einem offenen Tauchbad, das ständig gerührt und umgepumpt wird, um ein Absetzen von dispergierten Harzteilchen und Pigmenten zu vermeiden. Die Beschichtung erfolgt mit Gleichstrom von 50 bis 500 Volt, wobei der zu beschichtende Gegenstand als Anode geschaltet ist. Die Beschichtungszeit liegt zwischen 1 Sekunde und 3 Minuten. Emballagendosen werden

mit sehr kurzen Zeiten (etwa 5 bis 20 Sekunden), normale Industriegegenstände mit Hohlräumen 2 bis 3 Minuten beschichtet. Die Schichtdicke wird durch die gewählte Zeit und Spannung gesteuert. Nach Abspülen mit gegebenenfalls Ultrafiltrat und Wasser wird der Lack bei Temperaturen von 1 Sekunde bis zu 30 Minuten bei Temperaturen von 150 bis 250°C eingebrannt. Die dünnen Schichten der Getränkedosen werden durch eine Schocktrocknung mit kurzen Zeiten und hohen Temperaturen (1 Sekunde bis 250 Sekunden bei Temperaturen von 200 bis 230°C) gehärtet. Größere Industriegegenstände brauchen mit ihrer dickeren Lackschicht zum Erwärmen der Masse eine längere Zeit und werden dann mit einer niedrigeren Temperatur eingebrannt, beispielsweise 25 Minuten bei 175°C.

Die Lacke sind besonders für die Elektrotauchlackierung von Getränke- und Konservendosen geeignet und geben glatte, harte und elastische Filme mit guter Haftfestigkeit, die praktisch keine Poren mehr enthalten, und sich in den Lagerversuchen einwandfrei verhalten. Die Porigkeit wird dadurch festgestellt, daß die Prüfdose mit einem Elektrolyten gefüllt und durch Anlegen einer Prüfspannung von 4 Volt festgestellt wird, ob die Isolierwirkung des Films über einen Zeitraum von 30 Sekunden ausreichend ist. Bei Lagerversuchen mit Füllgütern wird festgestellt, ob Eisen-Ionen in die Lösung wandern bzw. wann Lochfraß auftritt. Es können jeweils Gemische der einzelnen Komponenten eingesetzt werden.

Die Viskosität des Überzugsmittels wird in an sich bekannter Weise entsprechend der gewünschten Applikationsart eingestellt. Es ist dem Fachmann bekannt, daß zur Elektrotauchlackierung relativ niedrige Viskositäten zweckmäßig sind, während bei anderen Applikationsarten wie Tauchen, Fluten, Spritzen, Aufwalzen oder Aufgießen höhere Viskositäten notwendig oder zweckmäßig sind. Das Spritzen kann z.B. mit Hilfe von Spritzpistolen entweder airless oder mit Druckluft erfolgen. Bei elektrostatischer Lackierung werden durch die angelegte Hochspannung die einzelnen Lacktröpfchen aufgeladen und durch ihre elektrische Ladung auf das Werkstück aufgebracht. Um einen Zusammenbruch des elektrischen Feldes am Sprühorgan zu verhindern, werden in bekannter Weise externe Hochspannungselektroden verwendet. Für eine gute Zerstäubung wird in bekannter Weise Druck- oder Rotationsenergie eingesetzt, wie dies für Wasserlacke gebräuchlich ist.

<u>Epoxidharz-Phosphorsäureester A 1</u>

914 g Polyglycidylether auf Basis Bisphenol A mit einem Epoxid-Äquivalentgewicht von 2250 werden unter Erwärmen auf 125°C in 440 g Butoxyethanol gelöst. 19.2 g 85 %ige Orthophosphorsäure werden mit 100 g Butoxyethanol verdünnt und innerhalb von 30 Minuten unter kräftigem Rühren bei 125°C zugegeben. Diese Temperatur wird 2 Stunden bis zur vollständigen Umsetzung der Orthophosphorsäure gehalten und dann auf 115°C abgekühlt. In das druckfest verschlossene System werden vorsichtig 10 g Wasser unterhalb der Oberfläche zugegeben, wobei der Druck vorübergehend leicht ansteigt. Anschließend wird zum Vervollständigen der Hydrolyse zwei Stunden bei 115°C gehalten. Nach Zusatz von 10 g 2-Dimethyl-2-methylpropanol (80 %ig in Wasser) wird mit 1426 g vollentsalztem Wasser verdünnt.

Endwerte:

| | |
|---|---|
| Festkörper: | 32 Gew.-% (nach einstündigem Erwärmen im Umlufttrockenschrank auf 150°C) |
| Säurezahl: | ca. 20 (mg KOH pro g Festharz) |

<u>Phenolharz-modifizierter Polyester A 2</u>

In einem mit Rührwerk, Thermometer und Kondensatabscheider ausgestattetem Dreihals-Kolben wird aus 3 Mol Hexandiol-1.6, 1 Mol Adipinsäure, 1 Mol Trimethylolpropan, 1 Mol Isophthalsäure und 1 Mol Trimellithsäureanhydrid unter Inertgas-Atmosphäre bei langsam ansteigenden Temperaturen von 160 bis 220°C ein Polyester unter Abspalten von Reaktionswasser hergestellt.

Kennwerte:

| | |
|---|---|
| Säurezahl: | ca. 70 mg KOH pro g Festharz |
| Viskosität: | 460 mPas der 50 %igen Harzlösung in Buthoxyethanol bei 25°C |

1178 g dieses Polyesters werden bei 100 bis 110°C umgesetzt mit 635 g eines Bisphenolresols, das in bekannter Weise durch alkalische Kondensation von 1 Mol Bisphenol A mit 3 Mol Formaldehyd hergestellt wurde. Nach Erreichen einer Viskosität von 1450 mPas, gemessen in 50 %iger Lösung in Buthoxyethanol bei 25°C, wird mit Buthoxyethanol auf einen Festkörper von 80 Gew.-% verdünnt und filtriert.

<u>Acryliertes Epoxidharz B 1</u>

826 g Polyglycidylether auf Basis Bisphenol A mit einem Epoxid-Äquivalentgewicht von 2250 werden unter Erwärmen auf etwa 125°C in 250 g Butoxyethanol und 380 g n-Butanol gelöst. Bei dieser Temperatur

werden innerhalb von 2 Stunden eine Monomerenmischung aus 130 g Methacrylsäure, 110 g Styrol und 16 g Benzolperoxid gleichmäßig zugegeben. Zum Auspolymerisieren wird anschließend noch 3 Stunden bei ca. 125°C unter Rühren gehalten. Nach Zusatz von 125 g 2-Dimethyl-2-methylpropanol (80 %ig in Wasser) wird mit 2620 g vollentsalztem Wasser verdünnt.

Endwerte:

Festkörper: 24 Gew.-% (nach einstündigem Erwärmen im Umlufttrockenschrank auf 150°C)
Säurezahl: ca. 80 (mg KOH pro g Festharz)

Phenolharz C 1

462 g Paraformaldehyd (91 %ig), 830 g destilliertes Wasser, 66.7 g Methanol und 1.5 g NaOH wurden gemischt und unter Rühren schnell auf 60°C erwärmt. Diese Temperatur wird gehalten, bis die Lösung klar ist. Nach Abkühlen auf Raumtemperatur werden 798 g Bisphenol A eindispergiert. Nach Zusatz von 723 g 33 %iger Natronlauge bei etwa 40 bis 45°Cwird gehalten, bis der Gehalt an freiem Formaldehyd nicht mehr absinkt. Nach Abkühlen des Ansatzes werden 1300 g n-Butanol zugegeben und bei 35°C etwa 300 ml Butanol-Wasser-Gemisch abdestilliert. Nach Zugabe von 80 g Toluol wird das entstehende Wasser bei langsam ansteigenden Temperaturen von 95 bis 115°C ausgekreist. Dann wird unter Vakuum bis auf einen Festkörper von etwa 65 Gew.-% eingeengt.

Festkörper: 66.6 Gew.-% (1 Stunde 120°C)
Viskosität: 28 Pas bei 25°C

Melaminharz C 2

Ein Reaktionsgemisch aus 1 Mol Melamin, 4.6 Mol Formaldehyd (Anwendungsform: Paraformaldehyd 91%) und 7 Mol Butanol wird in Gegenwart von 0.05 Gew.-% Phthalsäureanhydrid zum Sieden erhitzt und 1 Stunde kondensiert, wobei das Reaktionswasser abgetrennt wird. Man kühlt nun auf 90°C und gibt 5 Gew.-% Xylol hinzu. Das Reaktionsgemisch wird erneut zum Sieden erhitzt und aceotrop kondensiert, bis eine Verträglichkeit mit einem Gemisch aus 100 Gew.-Teilen n-Heptan und 20 Gew.-Teilen Toluol von ca. 15 ml bei 2 g Einwaage erreicht ist. Anschließend konzentriert man das Reaktionsprodukt auf einen Einbrenn-Rückstand (1 Stunde 120°C) von 55 Gew. % auf. Die so hergestellte Harzlösung weist eine Viskosität von 150 bis 250 mPas, eine Verträglichkeit mit einem Gemisch aus 100 Teilen n-Heptan und 20 Teilen Toluol von 10 bis 20 ml/2 g Einwaage, eine Säurezahl von $\leqq 1$ und eine Hazen-Farbzahl von $\leqq 20$ auf.

Festkörper: Gew. 56 %

Beispiel 1

306 g Epoxidharz-Phosphorsäureester A 1 werden gemischt mit 35 g phenolharzmodifiziertem Polyester A 2 und 37 g Phenolharz C 1, dann gemeinsam neutralisiert und 5 g 2-Dimethylamino-2-methylpropanol (80 %ig in Wasser) und auf 1 Liter mit vollentsalztem Wasser verdünnt.

Verhältnis der Komponenten (fest auf fest)

A1 : A2 : C1 = 65 : 19 : 16

Beispiel 2

281 g Epoxidharz-Phosphorsäureester A 1 werden gemischt mit 24 g phenolharzmodifiziertem Polyester A 2, 94 g acryliertem Epoxidharz B 1 und 32 g Melaminharz C 2, dann gemeinsam mit 4 g 2-Dimethylamino-2-methylpropanol (80 %ig in Wasser) neutralisiert und mit 1040 g vollentsalztem Wasser verdünnt.

Verhältnis der Komponenten (fest auf fest)

A1 : A2 : B1 : C2 = 60 : 13 : 15 : 12

Beispiel 3

239 g Epoxidharz-Phosphorsäureester A 1 werden gemischt mit 75 g acryliertem Epoxidharz B 1, 36 g Phenolharz-modifiziertem Polyester A 2 und 40 g Phenolharz C 1, danach gemeinsam mit 3 g 2-Dimethylamino-2-methylpropanol (80 %ig in Wasser) neutralisiert und auf 1 Liter mit vollentsalztem Wasser

verdünnt.
Verhältnis der Komponenten (fest auf fest)

A1 : A2 : B1 : C1 = 51 : 19 : 12 : 18

Die folgende Tabelle bezieht sich auf die vorstehenden drei Beispiele für wäßrige hitzehärtbare Überzugsmittel gemäß der Erfindung. Es sind ihre Verarbeitung sowie einige Eigenschaften der daraus erzielbaren Überzüge aufgeführt.

Die in den Beispielen erhaltenen Badflüssigkeiten wurden in eine tiefgezogene, abgestreckte zweiteilige Getränkedose aus verzinntem Stahlblech mit einem Durchmesser von 65 mm und einer Höhe von 112 mm gefüllt. Die gebördelte und außen bedruckte Dose wurde über den Boden als Anode geschaltet. Als Kathode diente ein runder Stab aus nicht rostendem Stahl von 6 mm Durchmesser, der in der Dosenmitte etwa 60 mm tief eingetaucht war.

| | Beispiel 1 | Beispiel 2 | Beispiel 3 |
|---|---|---|---|
| Festkörper (25 min, 180°C) | 15,5 Gew.-% | 10,0 Gew.-% | 15,0 Gew.-% |
| MEQ-Wert m-Äquivalento pro 100 g Festharz | ~ 35 | ~ 35 | ~ 40 |
| pH-Wert | 7,8 | 8,4 | 8,6 |
| Badleitfähigkeit | 990 µS/cm | 1190 µS/cm | 1505 µS/cm |
| Abscheidebedingungen | | | |
| Temperatur des Bades | 26°C | 21°C | 25°C |
| Abscheidezeit | 15 sec | 15 sec | 16,3 sec |
| Abscheidespannung | 100 V | 70 V | 100 V |
| Abscheideäquivalent | 40 C/g | 44 C/g | 47 C/g |
| Einbrenntemperatur bei 5 min Einbrennzeit | 225°C | 225°C | 225°C |
| auf der Dose abgeschiedene Menge | 250 mg/Dose | 230 mg/Dose | 234 mg/Dose |
| Prüfwerte | | | |
| Stromfluß bei 4V, gemssen 30 min in einer mit Eelktrolyt gefüllten Dose (Porigkeit) | 0mA | 0,5mA | 0mA |
| Oberflächenbeschaffenheit (optische Beurteilung) | gut | gut | gut |
| Haftung nach Sterilisation in Wasser 30 min bei 85°C | gut | gut | gut |
| Lösungsmittelretention in der Dose, nach thermischer Behandlung, bestimmt durch Gaschromatographie | < 0,5 mg/Dose | < 0,5 mg/Dose | < 0,5 mg/Dose |

## Patentansprüche

1. Wäßriges, hitzehärtbares Überzugsmittel auf Epoxidharz- und Polyesterharzbasis im Gemisch mit Aldehyd-Kondensationsharz als Vernetzungsmittel sowie mit organischem Lösemittel in einer Menge bis zu 20 Gew.-% bezogen auf das Gesamtgewicht des Überzugsmittels, und gegebenenfalls üblichen Lackzusatzstoffen sowie gegebenenfalls Pigmenten und/oder Füllstoffen, **dadurch gekennzeichnet,** daß es als Bindemittel enthalt

| | |
|---|---|
| 85 bis 40 Gew.-% | eines Gemischs aus |
| 40 bis 90 | Gewichtsteilen eines fettsäurefreien, sauren Epoxidharz-Phosphorsäureesters mit einer Säurezahl von 10 bis 150, hergestellt aus einem epoxidgruppenhaltigen Polyglycidylether und/oder Polyglycidyl(meth)acrylatharz mit mehr als 1.3 Epoxidgruppen pro Molekül und mit einem Epoxid-Äquivalentgewicht von 180 bis 5000 und |
| 10 bis 60 | Gewichtsteilen eines phenolharzmodifizierten, carboxylgruppenhaltigen, ölfreien Polyesters mit einer Säurezahl von 15 bis 175 und einer OH-Zahl von 15 bis 175 (Komponente A) |
| 0 bis 25 Gew.-% | Epoxidharz-Pfropfpolymerisat mit einer Säurezahl von 30 bis 200, hergestellt aus einem epoxidgruppenfreien Reaktionsprodukt von fettsäurefreien Polyglycidylethern mit mehr als 1.3 Epoxidgruppen pro Molekül und einem Epoxid-Äquivalentgewicht von 1000 bis 5000 mit $\alpha,\beta$-ungesättigten Monocarbonsäuren (Komponente B) |
| 5 bis 40 Gew.-% | vollverethertes Amin-Formaldehyd-Kondensationsharz und/oder vollverethertes Phenol-Formaldehyd-Kondensationsharz mit mindestens 2 reaktiven Stellen pro Molekül (Komponente C). |

2. Überzugsmittel nach Anspruch 1, dadurch gekennzeichnet, daß es 5 bis 25 Gew.-% der Komponente B enthält.

3. Überzugsmittel nach Anspruch 1 oder 2, dadurch gekennzeichnet, daß es als Bindemittel enthält

| | |
|---|---|
| Komponente A: | 75 bis 45 Gew.-% |
| Komponente B: | 10 bis 20 Gew.-% |
| Komponente C: | 10 bis 35 Gew.-%. |

4. Überzugsmittel nach einem der Ansprüche 1 bis 3, dadurch gekennzeichnet, daß die Komponente A ein Gemisch ist aus 40 bis 80 Gew.-% eines fettsäurefreien, sauren Epoxidharz-Phosphorsäureesters mit einer Säurezahl von 10 bis 30 und 20 bis 60 Gew.-% eines phenolharzmodifizierten, carboxylgruppenhaltigen, ölfreien Polyesters mit einer Säurezahl von 35 bis 70.

5. Überzugsmittel nach einem der Ansprüche 1 bis 4, dadurch gekennzeichnet, daß das Bindemittel enthält

| | |
|---|---|
| 50 bis 85 Gew.-% | Epoxidharz-Phosphorsäureester mit einer Säurezahl von 12 bis 30, |
| 5 bis 20 Gew.-% | phenolharzmodifizierter, ölfreier Polyester mit einer Säurezahl von 35 bis 70, und |
| 10 bis 40 Gew.-% | Phenol-Formaldehydkondensationsharz und/oder Melamin-Formaldehyd-Kondensationsharz. |

6. Überzugsmittel nach einem der vorhergehenden Ansprüche, dadurch gekennzeichnet, daß es enthält

| | |
|---|---|
| 40 bis 70 Gew.-% | Epoxidharz-Phosphorsäureester mit einer Säurezahl von 12 bis 30 |
| 10 bis 20 Gew.-% | phenolharzmodifizierten ölfreien Polyester mit einer Säurezahl von 35 bis 70, |
| 10 bis 20 Gew.-% | Epoxidharz-Pfropfpolymerisat mit einer Säurezahl von 65 bis 110 und |
| 10 bis 20 Gew.-% | Phenol-Formaldehydkondensationsharz und/oder Amin-Formaldehyd-Kondensationsharz. |

7. Verwendung des Überzugsmittels nach Anspruch 1 bis 6 zum Beschichten von Substraten.

8. Verwendung nach Anspruch 7 zum Beschichten von Gegenständen mit elektrisch leitender Oberfläche mittels anodischer Elektrotauchlackierung.

9. Verfahren zum Beschichten von Gegenständen mit einem Korrosionsschutz-Überzug durch Beschichten des Gegenstandes mit einem wäßrigen, hitzehartbaren Überzugsmittel und Einbrennen des Films

aus dem Überzugsmittel, **dadurch gekennzeichnet,** daß die Beschichtung mit einem Überzugsmittel gemäß Ansprüchen 1 bis 4 durchgeführt wird.

**10.** Verfahren nach Anspruch 9, dadurch gekennzeichnet, daß metallische Substrate beschichtet werden.

**11.** Verfahren nach Anspruch 10, dadurch gekennzeichnet, daß metallische Substrate mittels anodischer Tauchlackierung beschichtet werden.

**12.** Beschichtete Gegenstände, die mit einem wäßrigen, hitzehärtbaren Überzugsmittel beschichtet und eingebrannt sind, **dadurch gekennzeichnet,**
daß sie mit einem Überzugsmittel gemäß Ansprüchen 1 bis 6 beschichtet sind.

**13.** Beschichtete Gegenstände nach Anspruch 12, dadurch gekennzeichnet, daß es Metallgegenstände sind.

**14.** Beschichtete Gegenstände nach Anspruch 13, dadurch gekennzeichnet, daß sie durch anodische Tauchlackierung beschichtet sind.

**15.** Beschichtete Gegenstände nach Ansprüchen 12 bis 14, dadurch gekennzeichnet, daß es Getränke- oder Konserven-Dosen sind.

**Claims**

**1.** An aqueous, heat-curable coating agent based on epoxy resin and polyester resin mixed with aldehyde condensation resin as crosslinking agent together with organic solvent in a quantity of up to 20 wt% relative to the total weight of the coating agent and optionally conventional lacquer additives as well as optionally pigments and/or extenders, characterized in that it contains as binder

85 to 40 wt% of a mixture of

40 to 90 parts by weight of a fatty-acid-free acidic epoxy resin phosphoric acid ester with an acid number of 10 to 150, produced from an epoxy-group-containing polyglycidyl ether and/or polyglycidyl (meth)acrylate resin with more than 1.3 epoxy groups per molecule and with an epoxide equivalent weight of 180 to 5000 and

10 to 60 parts by weight of a phenolic-resin-modified, carboxyl-group-containing oil-free polyester with an acid number of 15 to 175 and a hydroxyl number of 15 to 175 (component A),

0 to 25 wt% of

epoxy resin graft copolymer with an acid number of 30 to 200, produced from an epoxy-group-free reaction product of fatty-acid-free polyglycidyl ethers with more than 1.3 epoxide groups per molecule and an epoxide equivalent weight of 1000 to 5000 with $\alpha,\beta$-unsaturated monocarboxylic acids (component B) and

5 to 40 wt% of

fully etherified amine formaldehyde condensation resin and/or fully etherified phenol formaldehyde condensation resin with at least two reactive positions per molecule (component C).

**2.** A coating agent according to claim 1, characterized in that it contains 5 to 25 wt% of component B.

**3.** A coating agent according to claim 1 or 2, characterized in that it contains as binder

75 to 45 wt% of component A,
10 to 20 wt% of component B, and
10 to 35 wt% of component C.

**4.** A coating agent according to one of claims 1 to 3, characterized in that component A is a mixture of 40

to 80 wt% of a fatty-acid-free, acidic epoxy resin phosphoric acid ester with an acid number of 10 to 30 and 20 to 60 wt% of a phenolic-resin-modified, carboxyl-group-containing, oil-free polyester with an acid number of 35 to 70.

5. A coating agent according to one of claims 1 to 4, characterized in that the binder contains

50 to 85 wt% epoxy resin phosphoric acid ester with an acid number of 12 to 30,

5 to 20 wt% of phenolic-resin-modified, oil-free polyester with an acid number of 35 to 70, and

10 to 40 wt% of phenol formaldehyde condensation resin and/or melamine formaldehyde condensation resin.

6. A coating agent according to one of the preceding claims, characterized in that it contains

40 to 70 wt% of epoxy resin phosphoric acid ester with an acid number of 12 to 30,

10 to 20 wt% of phenolic-resin-modified oil-free polyester with an acid number of 35 to 70,

10 to 20 wt% of epoxy resin graft copolymer with an acid number of 65 to 110, and

10 to 20 wt% of phenol formaldehyde condensation resin and/or amine formaldehyde condensation resin.

7. The use of the coating agent according to claims 1 to 6 for coating substrates.

8. The use according to claim 7 for coating articles with electrically conductive surface by means of anodic electrocoating.

9. A process for coating articles with an anticorrosive coating by coating the article with an aqueous, heat-curable coating agent and stoving the film of the coating agent, characterized in that the coating is carried out with a coating agent according to claims 1 to 4.

10. A process according to claim 9, characterized in that metallic substrates are coated.

11. A process according to claim 10, characterized in that metallic substrates are coated by anodic electrocoating.

12. Coated articles that are coated with an aqueous, heat-curable coating agent and stoved, characterized in that they are coated with a coating agent according to claims 1 to 6.

13. Coated articles according to claim 12, characterized in that they are metallic articles.

14. Coated articles according to claim 13, characterized in that they are coated by anodic electrocoating.

15. Coated articles according to claims 12 to 14, characterized in that they are beverage or preserve cans.

## Revendications

1. Produit d'enduction aqueux, thermodurcissable, à base de résine époxy et de résine polyester, en mélange avec une résine de condensation d'aldéhyde en tant qu'agent réticulant, ainsi qu'un solvant organique en une quantité allant jusqu'à 20% en poids par rapport au poids total de l'agent d'enduction, et éventuellement des additifs pour vernis classiques, ainsi qu'éventuellement des pigments et/ou des charges, caractérisé en ce qu'il contient comme liant

85 à 40% en poids d'un mélange de 40 à 90 parties en poids d'un ester phosphorique de résine époxy acide, exempt d'acide gras, ayant un indice d'acide de 10 à 150, préparé à partir d'un poly(éther de glycidyle) et/ou d'une résine de poly((méth)-acrylate de glycidyle) contenant des groupes époxy, ayant plus de 1,3 groupes époxy par

molécule et ayant un poids d'équivalent époxy de 180 à 5000 et 10 à 60 parties en poids d'un polyester exempt d'huile, contenant des groupes carboxy, modifié par une résine phénolique, ayant un indice d'acide de 15 à 175 et un indice d'OH de 15 à 175 (constituant A)

| | |
|---|---|
| 0 à 25% | en poids d'un polymère greffé de résine époxy ayant un indice d'acide de 30 à 200, préparé à partir d'un produit de réaction exempt de groupes époxy de poly(éthers de glycidyle) exempts d'acide gras, ayant plus de 1,3 groupes époxy par molécule et un poids d'équivalent époxy de 1000 à 5000, avec des acides monocarboxyliques $\alpha,\beta$-insaturés (constituant B) |
| 5 à 40% | en poids d'une résine de condensation amine-formaldéhyde totalement éthérifiée et/ou d'une résine de condensation phénol-formaldéhyde totalement éthérifiée ayant au moins 2 sites réactifs par molécule (constituant C). |

**2.** Produit d'enduction selon la revendication 1, caractérisé en ce cu'il contient 5 à 25% en poids du constituant B.

**3.** Produit d'enduction selon l'une des revendications 1 ou 2, caractérisé en ce cu'il contient comme liant

| | |
|---|---|
| constituant A: | 75 à 45% en poids |
| constituant B: | 10 à 20% en poids |
| constituant C: | 10 à 35% en poids. |

**4.** Produit d'enduction selon l'une quelconque des revendications 1 à 3, caractérisé en ce que le constituant A est un mélange de 40 à 80% en poids d'un ester phosphorique de résine époxy acide, exempt d'acide gras, ayant un indice d'acide de 10 à 30, et de 20 à 60% en poids d'un polyester exempt d'huile, contenant des groupes carboxy, modifié par une résine phénolique, ayant un indice d'acide de 35 à 70.

**5.** Produit d'enduction selon l'une quelconque des revendications 1 à 4, caractérisé en ce que le liant contient

| | |
|---|---|
| 50 à 85% | en poids d'ester phosphorique de résine époxy ayant un indice d'acide de 12 à 30, |
| 5 à 20% | en poids de polyester exempt d'huile, modifié par une résine phénolique, ayant un indice d'acide de 35 à 70, |
| 10 à 40% | en poids d'une résine de condensation phénol-formaldéhyde et/ou d'une résine de condensation mélamine-formaldéhyde. |

**6.** Produit d'enduction selon l'une quelconque des revendications précédentes, caractérisé en ce qu'il contient

| | |
|---|---|
| 40 à 70% | en poids d'un ester phosphorique de résine époxy ayant un indice d'acide de 12 à 30 |
| 10 à 20% | en poids d'un polyester exempt d'huile, modifié par une résine phénolique, ayant un indice d'acide de 35 à 70, |
| 10 à 20% | en poids d'un polymère greffé de résine époxy ayant un indice d'acide de 65 à 110 et |
| 10 à 20% | en poids d'une résine de condensation phénol-formaldéhyde et/ou d'une résine de condensation amine-formaldéhyde. |

**7.** Utilisation du produit d'enduction selon l'une quelconque des revendications 1 à 6 pour le revêtement de substrats.

**8.** Utilisation selon la revendication 7 pour le revêtement d'objets ayant une surface électriquement conductrice au moyen d'une électrodéposition anodique.

**9.** Procédé pour revêtir des objets avec un revêtement anticorrosion par enduction de l'objet avec un revêtement aqueux, thermodurcissable, et cuisson du film de produit d'enduction, caractérisé en ce qu'on effectue le revêtement avec un agent d'enduction selon l'une quelconque des revendications 1 à 4.

**10.** Procédé selon la revendication 9, caractérisé en ce qu'on enduit des substrats métalliques.

11. Procédé selon la revendication 10, caractérisé en ce qu'on enduit des substrats métalliques au moyen d'une électrodéposition anodique.

12. Objets revêtus, qui sont revêtus avec un produit d'enduction aqueux, thermodurcissable, et soumis à cuisson, caractérisés en ce qu'ils sont enduits avec un produit d'enduction selon l'une quelconque des revendications 1 à 6.

13. Objets revêtus selon la revendication 12, caractérisés en ce qu'ils sont des objets métalliques.

14. Objets revêtus selon la revendication 13, caractérisés en ce qu'ils sont enduits par électrodéposition anodique.

15. Objets revêtus selon l'une quelconque des revendications 12 à 14, caractérisés en ce qu'ils sont des boîtes pour boissons ou conserves.